Europäisches Patentamt

European Patent Office

Office européen des brevets

(19)

(11) Veröffentlichungsnummer: **0 193 090**
**B1**

(12) # EUROPÄISCHE PATENTSCHRIFT

(45) Veröffentlichungstag der Patentschrift: **01.08.90**

(21) Anmeldenummer: **86102127.7**

(22) Anmeldetag: **19.02.86**

(51) Int. Cl.⁵: **B 60 G 3/26, B 60 G 7/02**

(54) Hinterradaufhängung für Kraftfahrzeuge.

(30) Priorität: **28.02.85 DE 3507081**

(43) Veröffentlichungstag der Anmeldung:
**03.09.86 Patentblatt 86/36**

(45) Bekanntmachung des Hinweises auf die
Patenterteilung:
**01.08.90 Patentblatt 90/31**

(84) Benannte Vertragsstaaten:
**DE FR GB IT SE**

(56) Entgegenhaltungen:
**EP-A-0 083 183**
**DE-A-2 659 081**
**DE-A-3 316 448**
**FR-A-2 094 095**
**FR-A-2 496 565**

(73) Patentinhaber: **Bayerische Motoren Werke
Aktiengesellschaft
Patentabteilung AJ-30 Postfach 40 02 40
Petuelring 130
D-8000 München 40 (DE)**

(72) Erfinder: **Sautter, Wolfgang
Riesheimer Strasse 24
D-8032 Gräfelfing (DE)**
Erfinder: **Strasser, Ludwig
Ulrichstrasse 4a
D-8017 Ebersberg (DE)**
Erfinder: **Müller, Rudolf
Thomas-Schwarz-Strasse 43
D-8060 Dachau (DE)**

(74) Vertreter: **Dexheimer, Rolf
Bayerische Motoren Werke Aktiengesellschaft
Postfach 40 02 40 Petuelring 130 - AJ-31
D-8000 München 40 (DE)**

Courier Press, Leamington Spa, England.

## Beschreibung

Die Erfindung bezieht sich auf eine Hinterradaufhängung für Kraftfahrzeuge nach dem Oberbegriff des Patentanspruchs 1, wie sie beispielsweise durch die DE—A— 20 38 880 bekannt geworden ist.

Sind bei solchen Radaufhängungen die aufbauseitigen Enden aller Lenker direkt am Fahrzeugaufbau angelenkt, so befriedigen solche Radaufhängungen insbesondere wegen der hohen Geräuschübertragung in die Fahrzeugkarosserie nicht.

Es sind daher schon ein Reihe von Achsen anderer Gattung bekannt, bei denen sämtliche dem Radträger eines Rades zugeordneten Lenker aufbauseitig an einem Hilfsrahmen angelenkt sind, der seinerseits wiederum elastisch an der Fahrzeugkarosserie abgestützt ist. Auf diese Weise lassen sich die Abrollgeräusche des Reifens, von den Gelenkwellen her rührende Geräusche und ggf. auch vom Hinterachsgetriebe verursachte Geräusche gut von der Fahrzeugkarosserie fernhalten, so daß ein bezüglich des Geräuschverhaltens guter Komfort erreichbar ist. Ein wesentlicher Nachteil derartiger einen Hilfsrahmen aufweisenden Radaufhängungen besteht jedoch darin, daß einseitige Längskräfte auf den Hilfsrahmen ein Drehmoment um eine Hochachse ausüben, das wegen der elastischen Verbindung des Hilfsrahmens mit dem Fahrezeugaufbau zu einem Verdrehen des Hilfsrahmens um diese Hochachse fürt. Hieraus resultieren unerwünschte Lenkbewegungen sowohl des Rades, das der Längskraft unterworfen ist, als auch des anderen Rades dieser Achse, das ebenfalls mit all seinen Lenkern allein mit dem Hilfsrahmen verbunden ist.

Aus der DE—A—33 16 448 ist schon eine Radaufhängung bekannt, deren Radträger über einen in Längsrichtung weisenden Längsarm mit dem Fahrzeugaufbau und über zwei Querlenker mit einem Drehteil verbunden ist, das elastisch am Fahrzeugaufbau angelenkt ist. Das Drehteil verläuft etwa in Fahrzeuglängsrichtung und ist an einem Ende so über eine Gummibuchse mit dem Fahrzeugaufbau verbunden, daß es in gewissen Grenzen um eine Hochachse schwenken kann. Am freien Ende des Drehteils sind die aufbauseitigen Anlenkungen der beiden Querlenker vorgesehen. Mit der bekannten Radaufhängung sollen dem Rad unter dem Einfluß von Seitenkräften bestimmte Lenkbewegungen in Richtung untersteuernd aufgezwungen werden. Es dürfte jedoch sehr schwierig sein, mit der lediglich einen elastischen Abstützung des Drehteils am Fahrzeugaufbau eine kontrollierte, seitenkraftbedingte Lenkbewegung des Rades zu gewährleisten.

Der vorliegenden Erfindung liegt die Aufgabe zugrunde, eine Hinterradaufhängung der vorausgesetzten Gattung zu schaffen, die einerseits eine gute Geräuschisolierung zum Fahrzeugaufbau hin gestattet und andererseits insbesondere bei auf nur ein Rad einer Achse wirkenden Längskräften unerwünschte Lenkbewegungen dieses und/oder des anderen Rades einer Achse weitgehend vermeidet.

Diese Aufgabe wird bei einer Hinterradaufhängung der vorausgesetzten Bauart dadurch gelöst, daß die Querlenker mit ihren aufbauseitigen Enden an einem Hilfsrahmen angelenkt sind, der elastisch mit dem Fahrzeugaufbau verbunden ist, während der Längsarm direkt elastisch am Fahrzeugaufbau angelenkt ist.

Dank dieser Maßnahmen werden Längskräfte weitgehend allein vom Radträger über den Längsarm in den Fahrzeugaufbau eingeleitet. Die aufbauseitige Anlenkung des Längsarmes kann in Fahrzeuglängsrichtung verhältnismäßig weich gewählt werden. Längsstöße auf das Rad werden daher gut gedämpft, so daß die daraus resultierenden Geräusche nurmehr stark vermindert in den Fahrzeugaufbau übertragen werden. Außerdem ist die Struktur des Fahrzeugaufbaus an dieser Stelle in der Regel sehr stabil ausgebildet. Einseitig wirkende Längskräft bewirken in den quer zur Fahrtrichtung verlaufenden Querlenkern kaum nennenswerte, vor allem nicht gegensinnige Kräft. Sie werden bei einer Längsverlagerung des Radträgers (im Rahmen der Elastizität des aufbauseitigen Lagers des Längsarms) lediglich parallelogrammartig verschwenkt. Dabel wird keine Lenkbewegung auf das Rad augeübt. Da auch der Hilfsrahmen bei Längskräften allenfalls geringen zusätzlichen seitlichen Kräften ausgesetzt wird, führt er trotz seiner elastischen Verbindung mit dem Fahrzeugaufbau keine Dreh-Bewegungen aus, so daß auch hieraus keine unerwünschten Lenkbewegungen resultieren können. Trotzdem können die Querlenker so relativ zum Radträger positioniert werden—etwa durch eine gewisse Pfeilung in Draufsicht oder durch eine bestimmte Abstimmung ihrer Längen-, daß gewünschte geringe Lenkbewegungen in Richtung Vorspur oder Nachspur bei Längs- und Seitenkräften erzielbar sind. Diese geringen Lenkbewegungen sind jedoch gut beherrschbar und werden nicht von unerwünscht hohen zusätzlichen Lenkbewegungen überlagert.

Die Erfindung und weitere vorteilhafte Einzelheiten der Erfindung sind im folgenden anhand mehrerer in der Zeichnung dargestellter Ausführungsbeispiele näher erläutert. Es zeigen

Fig. 1 eine stark schematisierte Seitenansicht eines ersten Ausführungsbeispiels der neuen Hinterradaufhängung;

Fig. 2 eine schematisierte Draufsicht auf die Hinterradaufhängung nach Fig. 1;

Fig. 3 eine perspektivische Darstellung eines weiteren Ausführungsbeispiels der neuen Hinterradaufhängung und

Fig. 4. eine schematisierte Teil-Draufsicht der Radaufhängung nach Fig. 3.

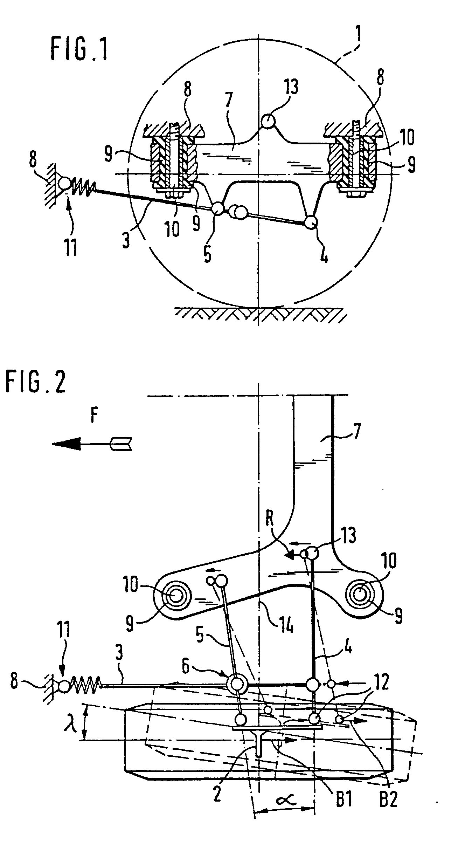

Bei der Hinterradaufhängung nach den Fig. 1 und 2 ist mit 1 das Rad bezeichnet, das auf einem lediglich angedeuteten Radträger 2 gelagert ist. Der Längsarm 3 ist bei diesem Ausführungsbeispiel nicht direkt mit dem Radträger 2 gelenkig verbunden, sondern mittelbar in der Weise, daß dieser Längsarm 3 gelenkig an dem hinteren Querlenker 4 angreift, der seinerseits gelenkig mit dem Radträger 2 verbunden ist. An dem Radträger

2

2 greift ferner ein weiterer in Draufsicht vor dem Querlenker 4 liegender Querlenker 5 an. Der vordere Querlenker 5 ist bei diesem Ausführungsbeispiel mit dem Längsarm über ein spezielles Verbindungslager 6 gekoppelt, daß etwa horizontale Relativverschiebungen zwischen dem Querlenker 5 und dem Längsarm 3 zuläßt, in etwa vertikaler Richtung jedoch den Querlenker 5 und den Längsarm 3 gegeneinander abstützt. Auf diese Weise läßt sich ein idealler, höher und weiter entfernt gelegener Anlenkpunkt für den Längsarm 3 erreichen, was im Zusammenhang mit der vorliegenden Erfindung jedoch nicht näher erläutert werden soll.

Wie insbesondere in Fig. 2 ersichtlich, sind die Querlenker 4 und 5 mit ihren aufbauseitigen Ende an einem Hilfsrahmen 7 angelenkt, der elastisch mit den Fahrzeugaufbau 8 verbunden ist. Der Längsarm 3 ist dagegen direkt elastisch am Fahrzeugaufbau 8 angelenkt. Der Hilfsrahmen 7 ist über Gummibuchsen 9 in bekannter Weise elastisch mit dem Fahrzeugaufbau 8 verbunden. Die die Gummibuchsen 9 durchsetzenden Befestigungsschrauben 10 sind bei dem dargestellten Ausführungsbeispiel vertikal angeordnet. Sie könnten ebenso geneigt sein und damit auch die Gummibuchsen 9 in einer gewünschten Richtung geneigt festlegen, um dem Hilfsrahmen bei auftretenden Kräften eine ganz gezielte und gewünschte Verlagerung vorzugeben. Durch die angedeutete Feder am aufbauseitigen Lager 11 des Längsarms 3 soll veranschaulicht werden, daß dieses Lager in Fahrzeuglängsrichtung F verhältnismäßig nachgiebig ist. Längsstöße, die auf das Rad einwirken, werden überwiegend durch den Längsarm 3 über das in Längsrichtung weiche Lager 11 in den Fahrzeugaufbau 8 eingeleitet, ohne daß hierbei den Komfort beeinträchtigende Geräusche auf die Karosserie übertragen würden. Da die Längskräfte überwiegend durch den Längsarm 3 aufgenommen werden, werden auf die Querlenker 4 und 5 nur kleinere Kräfte übertragen, die den elastisch mit dem Fahrzeugaufbau 8 verbundenen Hilfsrahmen 7 in seiner Sollage nur wenig beeinflussen, jedoch kaum verdrehen.

Die beiden radträgerseitigen Gelenke der beiden Querlender 4 und 5 haben in Draufsicht eine geringeren Längsabstand voneinander als die beiden am Hilfsrahmen 7 vorgesehenen Gelenke dieser Querlenker. Die Querlenker sind unter dem sogenannten Pfeilungswinkel α zueinander geneigt.

Wenn nachfolgend anhand des insbesondere in Fig. 2 ersichtlichen Ausführungsbeispiels trotzdem—zur Verdeutlichung übertrieben dargestellt—Lenkbewegungen des Rades 1 und kleine Verschiebebewegungen des Hilfsrahmens 7 erläutert werden, so handelt es sich um ganz gezielte und erwünschte Lenkbewegungen bzw. Verlagerungen.

Beim Auftreten einer Bremskraft B1 kann das Rad 1 um eine gewisse Wegstrecke nach hinten ausweichen. Unter anderem auch wegen des Pfeilungswinkels α, der einen weit außerhalb des Rades liegenden momentanen Drehpol ergibt, wird sich der Radträger 2 und damit das Rad 1 in der in der Zeichnung ersichtlichen (zur Verdeutlichung in strichlierten Linien übertrieben dargestellten) Weise um den gewünschten Vorspurwinkel λ verdrehen. Die Bremskraft B1 wird in einer zumindest annähernd gleichen Größe als Kraft B2 auf das äußere Gelenk 12 des hinteren Querlenkers 4 übertragen und erzeugt an dessen innerem Gelenk 13 eine Reaktionskraft R. Diese Reaktionskraft verlagert wiederum—in einem gewünschten Ausmaß—den Hilfsrahmen 7 etwas nach vorne, was das erwünschte Bewegen des Rades 1 in Vorspur noch unterstützt. Werden auf die Radaufhängung nicht Bremskräfte sonderen Antriebskräfte ausgeübt, so erfolgt die Verlagerung des Rades 1 bzw. des Hilfsrahmens in der umgekehrten Richtung.

Wie man erkennt, kann man dank der direkten elastischen Anlenkung des Längsarms 3 am Fahrzeugaufbau 8 in Verbindung mit der Anlenkung der beiden Querlenker 4 und 5 an dem seinerseits elastisch mit dem Fahrzeugaufbau verbundenen Hilfsrahmen 7 die eingangs erläuterten unerwünschten Lenkbewegungen des Hilfsrahmens 7 eliminieren, andererseits aber ganz gezielte elastokinematische Verlagerungen des Hilfsrahmens und damit auch des Rades jeweils im richtigen Sinn vorgeben.

Das Gelenk 11 am aufbauseitigen Ende des Längsarmes 3 kann ein in Längsrichtung nachgibiges Gummigelenk sein. Ferner können (in der Zwichnung nicht dargestellt) die zwei Querlenker im oberen Bereich des Radträgers und einer dritter Querlenker an dessen unterem Bereich angelenkt sind.

Bei den in der Zeichnung dargestellten Ausführungsformen sind die zwei Querlenker 4 und 5 im unteren Bereich des Radträgers 2 angelenkt und ein dritter Querlenker 13 ist in dessen oberem Bereich angelenkt.

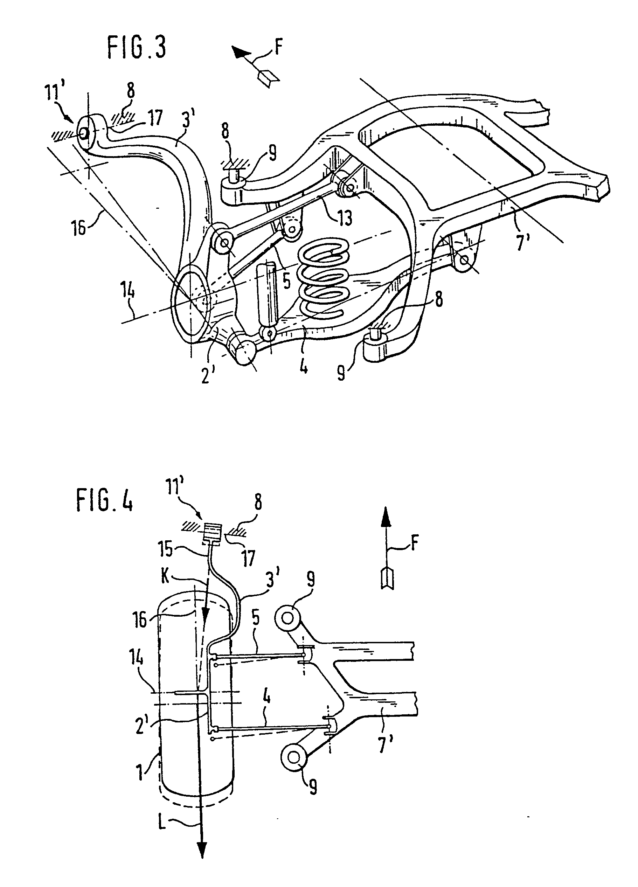

Bei dem in den Fig. 3 und 4 dargestellten Ausführungsbeispiel gehen der Längsarm 3' und der Radträger 2' einstückig ineinander über. Dabei muß dann das aufbauseitige Lager 11' des Längsarms 3' nicht nur in Längsrichtung nachgibig sein, sondern auch eine Querverlagerung des aufbauseitigen Endes des Längsarms 3' zulassen. Dieses Lager 11' sollte jedoch in etwa vertikaler Richtung verhältnismäßig hart ausgebildet sein.

Es ist besonders günstig, wenn—wie aus den Fig. 2 und 4 ersichtlich—die Querlenker 4 und 5 in Draufsicht etwa in gleichen Abständen vor und hinter der Radachse 14 angeordnet sind. Auf das Rad einwirkende Querkräfte werden dann etwa gleichmäßig auf die beiden Querlenker 4 und 5 und den Hilsrahmen 7 bzw. 7' verteilt, so daß dieser Hilfsrahmen weitgehend nur translatorische Querbewegungen durchführt. Größere Vorspuränderungen treten dabei nicht auf, allenfalls kleinere, aber wiederum nur solche in einer definierten und gewünschten Richtung.

Bei dem Ausführungsbeispiel nach den Fig. 3 und 4 ist das aufbauseitige Ende 15 des Längsarms 3' zur Radmittenebene 16 hin abgebogen, so daß das an diesem Ende 15 vorgesehene Lager 11' zumindest annähernd in der Radmittenebene 16 liegt. Auf dies Wiese erzeugen am Rad 1 angreifende Längskräfte nahezu kein Moment auf den Längsarm 3' um eine Hochachse. Sie werden daher nahezu ausschließlich von dem Längsarm 3' aufgenommen und allein über das Lager 11' in den Fahrzeugaufbau 8 eingeleitet.

Wird das Lager 11' geringfügig von der Radmittenebene nach innen versetzt, so ist zweckmäßig die Achse 17, längs der sich das aufbauseitige Ende 15 des Längsarms 3' quer verlagern kann, in Draufsicht so gegen eine Querebene geneigt, daß sich die bei auftretenden Längskräften am Längsarm 3' entstehende Reaktionskraft K mit der Längskraft L zwischen den Achsen der beiden Querlenker 4 und 5 schneidet (Fig. 4) Dank dieser Maßnahme werden auf die beiden Querlenker 4 und 5 etwa gleichgroße Querkräft ausgeübt und es kommt kaum zu Verdrehungen des Hilfsrahmens 7' um eine Hochachse.

Das aufbauseitige Lager 11' des Längsarmes 3' kann durch ein in Querverlagerungsrichtung weiches gummielastisches Lager gebildet sein. Es wäre auch möglich, dieses Lager durch ein gummielastisches Lager zu realisieren, das in Querverlagerungsrichtung in einer Gleitführung verschiebbar ist.

## Patentansprüche

1. Hinterradaufhängung für Kraftfahrzeuge, insbesondere für angetriebene Hinterräder, mit einem das Rad lagernden Radträger, einem mit dem Radträger und dem Fahrzeugaufbau verbundenen, etwa in Fahrzeuglängsrichtung verlaufenden Längsarm, sowie mindestens zwei in Draufsicht hintereinander angeordneten Querlenkern, die einerseits an dem Radträger und andererseits mit ihren aufbauseitigen Enden an einem Zwischenglied angelenkt sind, das elastisch mit dem Fahrzeugaufbau verbunden ist, dadurch gekennzeichnet, daß das Zwischenglied ein Hilfsrahmen (7, 7') ist, der über mehrere gummielastische Lager (Gummibuchsen (9) mit den Fahrzeugaufbau (8) verbunden ist.

2. Hinterradaufhängung nach Anspruch 1, dadurch gekennzeichnet, daß das Gelenk (11) am aufbauseitigen Ende des Längesarmes (3) ein in Längsrichtung nachgiebiges Gummigelenk ist.

3. Hinterradaufhängung nach Anspruch 1 dadurch gekennzeichnet, daß die zwei Querlenker im oberen Bereich des Radträgers und ein dritter Querlenker an dessen unterem Bereich angelenkt sind.

4. Hinterradaufhängung nach Anspruch 1, dadurch gekennzeichnet, daß die zwei Querlenker (4, 5) im unteren Bereich des Radträgers (2, 2') und ein dritter Querlenker (13) an dessen oberen Bereich angelenkt sind.

5. Hinterradaufhängung nach Anspruch 1, dadurch gekennzeichnet, daß die Querlenker (4, 5) in Draufsicht etwa in gleichen Abständen vor und hinter der Radachse (14) angeordnet sind.

6. Hinterradaufhängung nach Anspruch 1, dadurch gekennzeichnet, daß der Längsarm (3') und der Radträger (2') einstückig ineinander übergehen.

7. Hinterradaufhängung nach Anspruch 6, dadurch gekennzeichnet, daß das Gelenk (Lager 11') am aufbauseitigen Ende des Längsarmes (3') eine Querverlagerung dieses Endes zuläßt.

8. Hinterradaufhängung nach Anspruch 7, dadurch gekennzeichnet, daß das aufbauseitige Ende (15) des Längsarmes (3') zu Radmittenebene (16) hin abgebogen ist und das an diesem Ende vorgesehene Gelenk (Lager 11') etwa in der Radmittenebene (16) liegt.

9. Hinterradaufhängung nach Anspruch 2 und Anspruch 7, dadurch gekennzeichnet, daß die Achse (17), längs der sich das aufbauseitige Gelenk des Längsarms (3') quer verlagern kann, in Draufsicht so gegen eine Querebene geneigt ist, daß sich die bei auftretenden Längskräften am Längsarm (3') entstehende Reaktionskraft (K) mit der Längskraft (L) zwischen den Achsen der beiden Querlenker (4, 5), und in Längsrichtung zwischen den Lagern (9) des Hilfsrahmens (7') schneidet.

10. Hinterradaufhängung nach Anspruch 7, dadurch gekennzeichnet, daß das aufbauseitige Lager (11') des Längsarmes (3') durch ein in Querverlagerungsrichtung weiches gummielastisches Lager gebildet ist.

11. Hinterradaufhängung nach Anspruch 7, dadurch gekennzeichnet, daß das aufbauseitige Lager des Längsarmes durch ein gummielastisches Lager gebildet ist, das in Querverlagerungsrichtung in einer Gleitführung verschiebbar ist.

12. Hinterradaufhängung nach Anspruch 1, dadurch gekennzeichnet, daß die beiden radträgerseitigen Gelenke der beiden Querlenker (4, 5), in Draufsicht einen geringeren Abstand voneinander haben als deren beide am Hilfsrahmen (7) vorgesehenen Gelenke.

## Revendications

1. Suspension de roues arrière pour véhicules automobiles notamment pour des roues arrière motrices, comportant un support de roue recevant une roue, un bras longitudinal dirigé sensiblement dans la direction longitudinale de déplacement et que est relié au support de roue et à la carrosserie ainsi qu'au moins deux bras transversaux disposés l'un derrière l'autre, en vue de-dessus, bras transversaux qui sont articulés d'une part au support de roue et d'autre part par leur extrémité située du côté de la carrosserie, à une pièce intermédiaire, cette dernière étant reliée élastiquement à la carrosserie, suspension caractérisée en ce que la piéce intermédiaire est un châssis auxiliaire (7, 7') qui est relié par plusieurs paliers élastiques à la manière du caoutchouc (manchon en caoutchouc 9) à la carrosserie (8).

2. Suspension de roues arrière selon la revendication 1, caractérisé en ce que l'articulation (11) de l'extrémité du bras longitudinal (3) du côté de la carrosserie est une articulation à caoutchouc souple dans la direction longitudinale.

3. Suspension de roues arrière selon la revendication 1, caractérisé en ce que les deux bras transversaux sont articulés dans la zone supérieure du support de roue et un troisième bras transversal est articulé dans sa zone inférieure.

4. Suspension de roues arrière selon la revendication 1, caractérisée en ce que les deux bras transversaux (4, 5) sont articulés dans la zone inférieure du supoort de roue (2, 2') et un troisième bras transversal (13) est articulé à sa zone supérieure.

5. Suspsension de roues arrière selon la revendication 1, caractérisée en ce que les bras transversaux (4, 5) sont, en vue de-dessus, sensiblement équidistants en amont et en aval de l'axe de roue (14).

6. Suspension de roues arrière selon la revendication 1, caractérisée en ce que le bras longitudinal (3') et le support de roue (2') sont réalisés en une seule pièce.

7. Suspension de roues arrière selon la revendication 6, caractérisé en ce que l'articulation (palier 11') à l'extrémité du bras longitudinal (3') du côté de la carrosserie permet un déplacement transversal de cette extrémité.

8. Suspension de roues arrière selon la revendication 7, caractérisée en ce que l'extrémité (15') du bras longitudinal (3') du côte de la carrosserie est recourbée en direction du plan médian (16) de la roue et l'articulation prévue à cette extrémité (palier 11') se trouve sensiblement dans le plan médian (16) de la roue.

9. Suspension de roues arrière selon la revendication 2 et la revendication 7, caractérisée en ce que l'axe (17) peut se déplacer transversalement le long de l'articulation du bras longitudinal (3') prévu du côté de la carrosserie, et est incliné en vue dedessus par rapport à un plan transversal pour que la force de réaction (K) engendrée par les forces longitudinales dans le bras longitudinal (3') couple la force longitudinale (L) entre les axes des deux bras (4, 5) et dans la direction longitudinale entre les paliers (9) du châssis auxiliaire (7').

10. Suspension de roues arrière selon la revendication 7, caractérisé en ce que le palier (11') du bras longitudinal (3') du côte de la carrosserie est formé par un palier élastique à la manière du caoutchouc, souple, dans la dirction de déplacement transversale.

11. Suspension de roues arrière selon la revendication 7, caractérisée en ce que la palier du bras longitudinal du côte de la carrosserie est formé par un palier élastique à la manière du caoutchouc, qui peut coulisser dans un palier glissant dans la direction de déplacement transversale.

12. Suspension de roues arrière selon la revendication 1, caractérisé en ce que les deux articulations du côté du support de roue pour les deux bras transversaux (4, 5) sont, en vue de-dessus, distantes d'une distance plus faible que les deux autres articulations prévues sur le châssis auxiliaire (7).

**Claims**

1. A rear wheel suspension for motor vehicles, more particularly for driven rear wheels, comprising a wheel-carrying support, a longitudinal arm connected to the wheel support and the car body and extending approximately in the longitudinal direction of the vehicle, and at least two transverse control arms disposed one behind the other in plan view and pivoted at one end to the wheel support and at the other end to an intermediate member flexibly connected to the car body, characterised in that the intermediate member is an auxiliary frame (7, 7') connected via a number of elastomeric bearings (rubber bearings (9) to the car body (8).

2. A rear wheel suspension according to claim 1, characterised in that the joint (11) at the car-body end of the longitudinal arm (3) is a rubber joint flexible in the longitudinal direction.

3. A rear wheel suspension according to claim 1, characterised in that the two transverse control arms are pivoted to the upper region of the wheel support and a third transverse control arm is pivoted to its lower region.

4. A rear wheel suspension according to claim 1, characterised in that the two transverse control arms (4, 5) are pivoted to the lower region of the wheel support (2, 2') and a third control arm (13) is pivoted to its upper region.

5. A rear wheel suspension according to claim 1, characterised in that the transverse control arms (4, 5) in plan view are disposed at approximately equal distances in front of and behind the axle (14).

6. A rear wheel suspension according to claim 1, characterised in that the longitudinal arm (3') and the wheel support (2') are in one piece and merge into one another.

7. A rear wheel suspension according to claim 6, characterised in that the pivot (bearing 11') at the car-body end of the longitudinal arm (3') allows the end to move transversely.

8. A rear wheel suspension according to claim 7, characterised in that the car-body end (15) of the longitudinal arm (3') is bent towards the wheel centre plane (16), and the joint (bearing 11') at the aforementioned end lies approximately in the wheel centre plane (16).

9. A rear wheel suspension according to claim 2 and claim 7, characterised in that the axis (17) along which the joint at the car-body end of the longitudinal arm (3') can move transversely is inclined in plan view to a transverse plane so that the force (K) occurring in reaction to longitudinal forces on the longitudinal arm (3') intersects the longitudinal force (L) between the axes of the two transverse guide arms (4, 5) and in the longitudinal direction between the bearings (9) of the auxiliary frame (7').

10. A rear wheel suspension according to claim 7, characterised in that the bearing (11') on the car-body end of the longitudinal arm (3') is an elastomeric bearing which is soft in the direction of transverse displacement.

11. A rear wheel suspension according to claim 7, characterised in that the bearing at the car-body end of the longitudinal arm is an elastomeric bearing which is movable in a sliding guide in the direction of transverse displacement.

12. A rear wheel suspension according to claim 1, characterised in that the two joints at the wheel-support ends of the two transverse control arms (4, 5) are closer together in plan view than the two joints on the auxiliary frame (7).

**EP 0 193 090 B1**

FIG.1

FIG.2

FIG.3

FIG.4